# EUROPEAN PATENT APPLICATION

(11) **EP 3 270 131 A1**
(43) Date of publication of application: **17.01.2018**
(21) Application number: 16764864.1
(22) Date of filing: 10.03.2016
(51) Int. Cl.: G01K 7/24

(54) **ABNORMALITY DETECTING DEVICE**

(30) Priority: 13.03.2015 JP 2015051344
(71) Applicant: Aisin Seiki Kabushiki Kaisha, Aichi 448-8650 (JP)
(72) Inventor: NAKAMURA, Manabu, Kariya-shi, Aichi-ken 448-8650 (JP)
(74) Representative: Winter, Brandl, Fürniss, Hübner, Röss, Kaiser, Polte - Partnerschaft mbB
(86) International application number: PCT/JP2016/057672
(87) International publication number: WO 2016/148034

(57) **Abstract**

An MPU, which serves as an anomaly detecting device, carries out a drive circuit operating state determination (step 202). If the drive circuit is in a non-driving state (step 202: NO), the MPU stores in a storage area a board temperature detected value Tc, which is detected at each predetermined calculation cycle, as a board temperature reference value Tr (Tr = Tc, step 203). If the drive circuit is in a driving state (step 202: YES), the MPU reads out the reference value Tr stored in the storage area (step 204) and calculates a difference ΔT between the reference value Tr and the detected value Tc detected at each predetermined calculation cycle (ΔT = Tc - Tr, step 205). Then, if the absolute value of the difference ΔT is less than or equal to a predetermined threshold value α (|ΔT| ≤ α, step 206: YES), the MPU determines that a stuck anomaly of the output signal from the temperature sensor has occurred.

## Description

### TECHNICAL FIELD

The present invention relates to an anomaly detecting device.

### BACKGROUND ART

Typically, a circuit board on which a drive circuit is arranged has a temperature sensor, which detects the temperature of the circuit board. A control unit (ECU) including the temperature sensor may have a function of detecting an anomaly of the temperature sensor.

For example, an in-vehicle control unit described in Patent Document 1 employs a heat sensitive element as a temperature sensor. An anomaly detecting means mounted on the control unit obtains, as a first value, an output value of the heat sensitive element before activation of the vehicle or in a certain period of time following such activation of the vehicle. The anomaly detecting means also obtains another output value of the heat sensitive element as a second value after a predetermined time following the time point at which the first value is obtained. The anomaly detecting means detects an anomaly of the temperature sensor based on the difference between the first value and the second value.

After the vehicle is activated and the drive circuit starts to output drive electric power, the temperature of the circuit board, on which the drive circuit is arranged, increases. By determining whether the temperature change at this time is in an appropriate range, the anomaly detecting means detects an anomaly of the temperature sensor.

However, since the above-described conventional configuration performs anomaly determination with reference to the board temperature at the time of activation of the vehicle, an anomaly caused after the activation of the vehicle is undetectable. That is, the configuration is difficult to employ in a case in which the output of drive electric power by the drive circuit does not happen in conjunction with the activation of the vehicle.

### PRIOR ART DOCUMENT

### Patent Document

Patent Document 1: Japanese Laid-Open Patent Publication No. 2010-255618

### SUMMARY OF THE INVENTION

### Problems that the Invention is to Solve

Accordingly, it is an objective of the present invention to provide an anomaly detecting device capable of detecting an anomaly of a temperature sensor under a wider range of conditions of use.

### Means for Solving the Problems

To achieve the foregoing objective and in accordance with a first aspect of the present invention, an anomaly detecting device that includes a drive determining section, a reference value maintaining section, and a stuck anomaly detecting section is provided. The drive determining section determines an operating state of a drive circuit arranged on a circuit board. When the drive circuit is in a non-driving state, the reference value maintaining section maintains a detected value of a board temperature detected by a temperature sensor arranged on the circuit board as a reference value of the board temperature. When the drive circuit is in a driving state, the stuck anomaly detecting section calculates a difference between the detected value of the board temperature detected by the temperature sensor and the reference value of the board temperature maintained by the reference value maintaining section. If an absolute value of the difference is less than or equal to a predetermined threshold value, the stuck anomaly detecting section determines that there is a stuck anomaly of an output signal in the temperature sensor.

### BRIEF DESCRIPTION OF THE DRAWINGS

Fig. 1 is a diagram schematically illustrating the configuration of a control unit (ECU) that supplies driving power to an in-vehicle actuator (ACT).
Fig. 2 is a flowchart representing the steps of a procedure of board temperature detection and anomaly determination.
Fig. 3 is a flowchart representing the steps of a procedure of stuck anomaly determination for a temperature sensor.
Fig. 4 is a flowchart representing the steps of a procedure of break anomaly determination for the temperature sensor.
Fig. 5 is a flowchart representing the steps of a procedure of short-circuit anomaly determination for the temperature sensor.
Fig. 6 is a flowchart representing the steps of a procedure of overheating anomaly determination for a circuit board.

### MODES FOR CARRYING OUT THE INVENTION

An anomaly detecting device according to one embodiment will now be described with reference to the attached drawings. The anomaly detecting device is mounted in a control unit of an in-vehicle actuator.

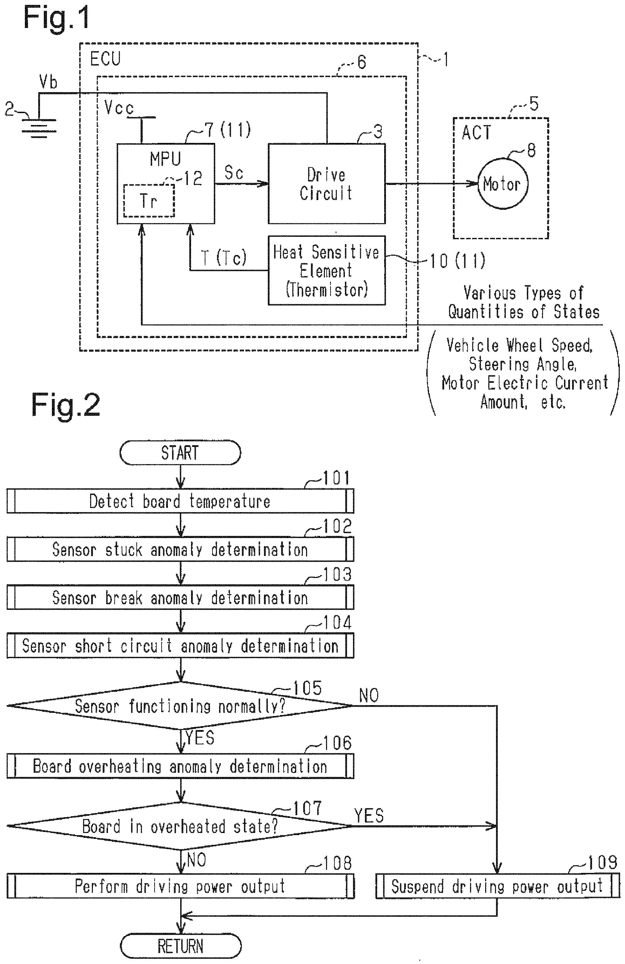

With reference to Fig. 1, a control unit (ECU) 1 includes a drive circuit 3, which outputs driving power based on a power source voltage Vb of the in-vehicle power source (battery) 2. The driving power output by the drive circuit 3 is supplied to an in-vehicle actuator (ACT) 5 such that the operation of the actuator 5 is controlled.

Specifically, the control unit 1 includes an MPU (microprocessor) 7, which is mounted on a circuit board 6, together with the drive circuit 3. The MPU 7 is operated by control voltage Vcc, which is regulated by a non-illustrated power source circuit. Quantities of states of the actuator 5, to which the control unit 1 supplies driving power, and quantities of states related to the vehicle in which the actuator 5 is installed are input to the MPU 7. Based on the various types of quantities of states, which have been input to the MPU 7, the MPU 7 generates a control signal Sc. The drive circuit 3 is operated in correspondence with the control signal Sc such that the control unit 1 supplies the driving power to the actuator 5.

Specifically, the actuator 5 has a motor 8, which is rotated by the supplied driving power. The actuator 5 is used in, for example, a shock absorber of a suspension. The motor electric current amount, the vehicle wheel speed, the steering angle, and the like are input to the MPU 7 as the quantities of states of the actuator 5 and the vehicle. Based on these various types of quantities of states, the MPU 7 generates the control signal Sc for the motor 8.

The drive circuit 3 uses a publicly known PWM inverter, which is formed by connecting multiple switching elements (FETs) together in a bridge-like manner. The control signal Sc, which is generated by the MPU 7 serving as a motor control unit, is input to the drive circuit 3 as a gate on/off signal in response to which the switching elements are operated.

The control unit 1 also includes a heat sensitive element (thermistor) 10, which is arranged on the circuit board 6 together with the drive circuit 3. An output signal of the heat sensitive element 10 is input to the MPU 7. Based on the output signal of the heat sensitive element 10, the MPU 7 detects the board temperature T of the circuit board 6.

That is, the heat sensitive element 10 and the MPU 7 form a temperature sensor 11. The MPU 7 serving as an anomaly detecting device determines whether the circuit board 6 is in an overheated state based on the detected board temperature T (board overheating anomaly determination). When the MPU 7 determines that the circuit board 6 is in an overheated state, the MPU 7 suspends control of the output of driving power.

Further, based on the detected board temperature T, the MPU 7 performs anomaly determination for the heat sensitive element 10, which configures the temperature sensor 11, and the connection circuit of the heat sensitive element 10. Also when the MPU 7 detects an anomaly, the MPU 7 suspends the control of the output of driving power.

Specifically, with reference to the flowchart of Fig. 2, the MPU 7 detects the board temperature T of the circuit board 6 based on the output signal of the heat sensitive element 10 (Step 101). The MPU 7 first detects the board temperature T by functioning as the temperature sensor 11 and then, based on the board temperature T, performs anomaly determination for the heat sensitive element 10, which configures the temperature sensor 11 (Steps 102 to 104).

Specifically, the MPU 7 determines whether there is an anomaly that causes an unchanged state of the output signal of the heat sensitive element 10, which is a stuck anomaly of the output signal (stuck anomaly determination, Step 102). The MPU 7 then determines whether there is a break anomaly in the heat sensitive element 10 (break anomaly determination, Step 103) and whether there is a short-circuit anomaly (short-circuit anomaly determination, Step 104).

Subsequently, based on the result of the anomaly determinations performed in Steps 102 to 104, the MPU 7 determines whether the heat sensitive element 10 is functioning normally as the temperature sensor 11, or the temperature sensor 11 is functioning normally (Step 105). Only when the MPU 7 determines that the temperature sensor 11 functions normally, or the detected board temperature T is an accurate value (Step 105: YES), the MPU 7 performs board overheating anomaly determination based on the detected board temperature T (Step 106).

That is, if the result of the board overheating anomaly determination performed in Step 106 does not indicate overheating of the circuit board 6 (Step 107: NO), the MPU 7 performs control of the output of driving power (Step 108). In contrast, if the result of the board overheating anomaly determination indicates overheating of the circuit board 6 (Step 107: YES), the MPU 7 suspends the control of the output of driving power (Step 109).

When the MPU 7 determines that the temperature sensor 11 is not functioning normally (Step 105: NO), the MPU 7 suspends the control of the output of driving power in Step 109. In this manner, to improve reliability, the control unit 1 carries out fail-safe operation.

More specifically, the MPU 7 performs the calculation procedures of Steps 101 to 108 at predetermined calculation cycles. Also, in the stuck anomaly determining procedure of Step 102, the MPU 7 performs operating state determination for the drive circuit 3. Specifically, the MPU 7 determines whether the drive circuit 3 is in a driving state, in which the drive circuit 3 outputs driving power, or a non-driving state, in which the drive circuit 3 does not output the driving power. If the drive circuit 3 is in the non-driving state, the MPU 7 memorizes the detected value Tc of the board temperature T, which is detected at predetermined calculation cycles, as the reference value Tr of the board temperature T in a storage area 12 shown in Fig. 12.

In contrast, when the drive circuit 3 is in the driving state, the MPU 7 reads out the reference value Tr, which is memorized in the storage area 12, and calculates the difference ΔT between the reference value Tr and the detected value Tc, which is detected at each predetermined calculation cycle. If the absolute value of the difference ΔT is less than or equal to a predetermined threshold value α (|ΔT| ≤ α), the MPU 7 determines that there is a stuck anomaly of the output signal in the heat sensitive element 10, which configures the temperature sensor 11.

That is, the board temperature T of the circuit board 6, on which the drive circuit 3 is arranged, starts to increase when the drive circuit 3 starts to output driving power. The temperature change at this time is represented as the difference ΔT between the board temperature T before the drive circuit 3 is switched to the driving state (the reference value Tr) and the board temperature T after the drive circuit 3 is switched to the driving state (the detected value Tc). Therefore, if, despite the fact that the drive circuit 3 is in the driving state, temperature increase of the circuit board 6 is not detected (|ΔT| ≤ α), the MPU 7 determines that the output signal of the heat sensitive element 10, which is the basis of the detected value Tc, is in an unchanged state and that there is a stuck anomaly of the output signal.

Also, when the stuck anomaly is detected continuously for a predetermined time, the MPU 7 confirms the determination of detection of the stuck anomaly of the output signal. The MPU 7 then determines that the temperature sensor 11 has an anomaly (Step 105: NO) and suspends the control of the output of driving power (Step 109).

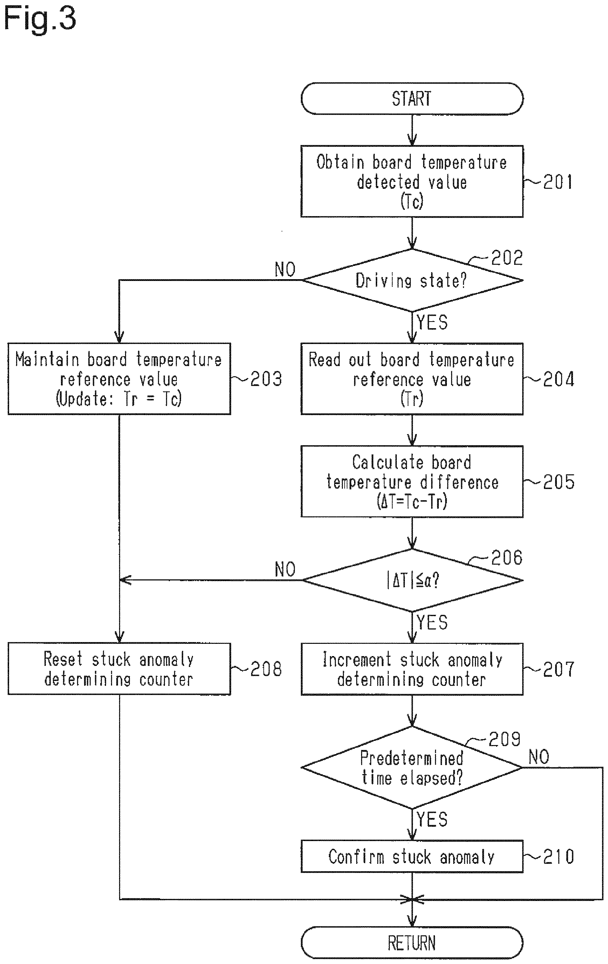

Specifically, in the stuck anomaly determination represented in the flowchart of Fig. 3, the MPU 7 first obtains the detected value Tc of the board temperature T at a calculation cycle (Step 201). Then, the MPU 7 determines whether the operating state of the drive circuit 3 is the driving state (Step 202). If the MPU 7 determines that the drive circuit 3 is in the non-driving state (Step 202: NO), the MPU 7 memorizes the detected value Tc of the board temperature T, which is detected in Step 201, in the storage area 12 as the reference value Tr of the board temperature T (Tr = Tc, Step 203).

In contrast, if the MPU 7 determines that the drive circuit 3 is in the driving state (Step 202: YES), the MPU 7 reads out the reference value Tr of the board temperature T, which is memorized in the storage area 12 (Step 204), and calculates the difference ΔT between the detected value Tc of the board temperature T, which is detected in Step 201, and the reference value Tr (ΔT = Tc - Tr, Step 205). The MPU 7 then determines whether the absolute value of the difference ΔT is less than or equal to the predetermined threshold value α (Step 206).

If the MPU 7 determines that the absolute value of the difference ΔT between the detected value Tc and the reference value Tr is less than or equal to the predetermined threshold value α (|ΔT| ≤ α, Step 206: YES), the MPU 7 increments a non-illustrated stuck anomaly determining counter (Step 207). In contrast, if the MPU 7 determines that the difference ΔT between the detected value Tc and the reference value Tr exceeds the predetermined threshold value α (Step 206: NO), the MPU 7 resets the stuck anomaly determining counter (Step 208). Similarly, also when the MPU 7 determines that the drive circuit 3 is in the non-driving state (Step 202: NO), the MPU 7 resets the stuck anomaly determining counter.

As long as the difference ΔT between the detected value Tc and the reference value Tr continues to be less than or equal to the predetermined threshold value α (Step 206: YES) despite the fact that the drive circuit 3 is in the driving state (Step 202: YES), the value of the stuck anomaly determining counter is incremented at each predetermined calculation cycle. When the value of the stuck anomaly determining counter reaches a value representing a predetermined elapsed time, which is set in advance (Step 209: YES), the MPU 7 confirms the determination of detection of the stuck anomaly that has occurred in the heat sensitive element 10, which configures the temperature sensor 11 (Step 210).

In contrast, when the drive circuit 3 is in the non-driving state (Step S202: NO), the MPU 7 performs the procedure of Step 203 at each predetermined calculation cycle. In this manner, the reference value Tr of the board temperature T, which is memorized in the storage area 12, is updated by a new detected value Tc as needed.

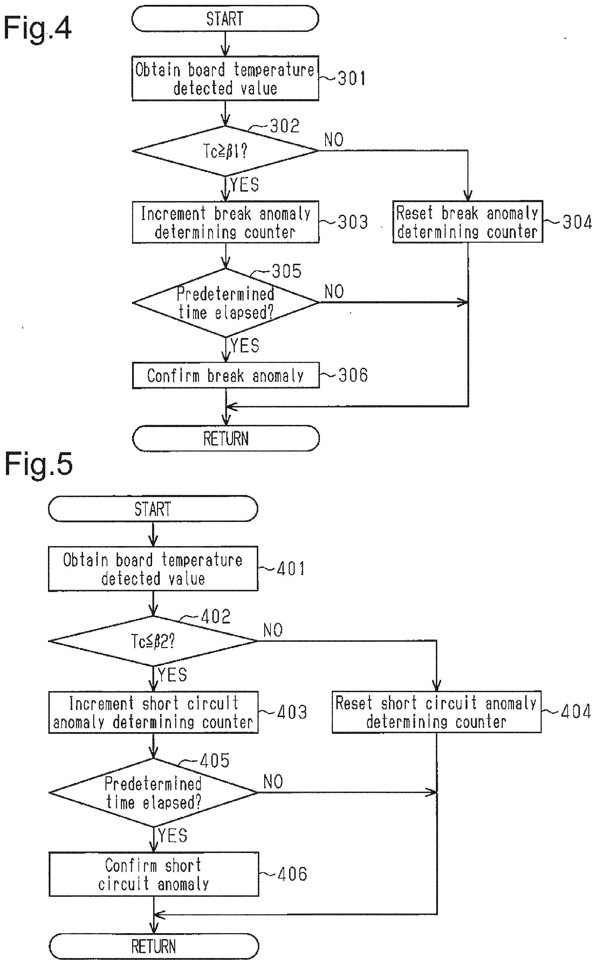

Further, in the break anomaly determination, the short-circuit anomaly determination, and the board overheating anomaly determination represented in the corresponding flowcharts of Figs. 4 to 6 (see Steps 103, 104, and 106 of Fig. 2), the MPU 7 compares the detected value Tc of the board temperature T with a corresponding one of predetermined thresholds values β1, β2, and γ, which are set in advance.

Specifically, in the break anomaly determination represented by the flowchart of Fig. 4, the MPU 7 obtains the detected value Tc of the board temperature T (Step 301) and determines whether the detected value Tc is greater than or equal to a predetermined threshold value β1 (Step 302). If the detected value Tc is greater than or equal to the predetermined threshold value β1 (Tc ≥ β1, Step 302: YES), the MPU 7 determines that there is a break anomaly in the heat sensitive element 10, which configures the temperature sensor 11, and the connection circuit of the heat sensitive element 10.

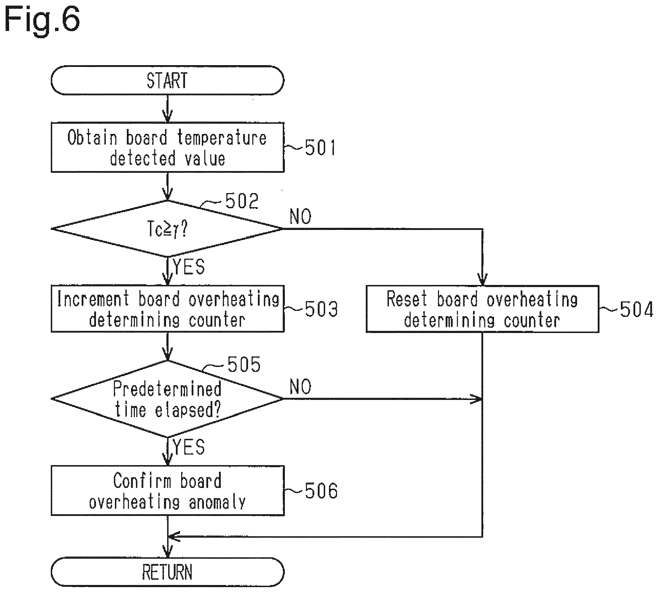

Also, in the short-circuit anomaly determination represented by the flowchart of Fig. 5, if the detected value Tc of the board temperature T is less than or equal to a predetermined threshold value β2 (Tc ≤ β2, Step 402: YES), the MPU 7 determines that there is a short-circuit anomaly in the heat sensitive element 10, which configures the temperature sensor 11, and the connection circuit of the heat sensitive element 10. In the board overheating anomaly determination represented by the flowchart of Fig. 6, if the detected value Tc of the board temperature T is greater than or equal to a predetermined threshold value γ (Tc ≥ γ, Step 502: YES), the MPU 7 determines that the circuit board 6 is in an overheated state.

Further, as in the case of the above-described stuck anomaly determination, if each of the aforementioned anomalies is detected continuously for a predetermined time, the MPU 7 confirms the determination of detection of the anomaly. Also in this case, the procedure of confirming the anomaly detection based on such continuation for the predetermined time is performed using a dedicated counter.

In the break anomaly determination represented by the flowchart of Fig. 4, if the MPU 7 determines that the detected value Tc of the board temperature T is greater than or equal to the predetermined threshold value β1 (Step 302: YES), the MPU 7 increments a break anomaly determining counter (Step S303). In contrast, if the MPU 7 determines that the detected value Tc is less than the predetermined threshold value β1 (Step 302: NO), the MPU 7 resets the break anomaly determining counter (Step S304). When the value of the break anomaly determining counter reaches the value representing a predetermined elapsed time, which is set in advance (Step 305: YES), the MPU 7 confirms the determination of detection of a break anomaly that has occurred in the heat sensitive element 10, which configures the temperature sensor 11 (Step 306).

In the short-circuit anomaly determination represented by the flowchart of Fig. 5, the MPU 7 confirms the determination of detection of a short-circuit anomaly through the steps (Steps 402 to 406) of a procedure similar to the break anomaly determination of Steps 302 to 306. Also, in the overheating anomaly determination represented by the flowchart of Fig. 6, the MPU 7 confirms the determination of detection of a board overheating anomaly by the steps (Steps 502 to 506) of a procedure similar to the break anomaly determination of Steps 302 to 306. Based on the confirmed determination results of anomaly detections, the MPU 7 suspends the control of the output of driving power (see Steps 105, 107, and 109 of Fig. 2).

The present embodiment has the following advantages.
(1) The MPU 7, which serves as the anomaly detecting device, performs the operating state determination for the drive circuit 3. When the drive circuit 3 is in the non-driving state, the MPU 7 memorizes the detected value Tc of the board temperature T, which is detected at each predetermined calculation cycle, in the storage area 12 as the reference value Tr of the board temperature T. In contrast, if the drive circuit 3 is in the driving state, the MPU 7 reads out the reference value Tr, which is memorized in the storage area 12, and calculates the difference ΔT between the reference value Tr and the detected value Tc, which is detected at each predetermined calculation cycle. When the absolute value of the difference ΔT is less than or equal to the predetermined threshold value α (|ΔT| ≤ α), the MPU 7 determines that there is a stuck anomaly of the output signal in the heat sensitive element 10, which configures the temperature sensor 11.
   In the above-described configuration, even when the drive circuit 3 outputs driving power intermittently and non-periodically, a stuck anomaly of the output signal that has occurred in the temperature sensor 11 is detected accurately. A stuck anomaly that has occurred after actuation of the vehicle is also detected. That is, an anomaly of the temperature sensor 11 is detected under a wider range of conditions of use.
(2) When the drive circuit 3 is in the non-driving state, the MPU 7 updates the reference value Tr of the board temperature T, which is memorized in the storage area 12, to a new detected value Tc as needed.

In the above-described configuration, the board temperature T immediately before the drive circuit 3 starts to output driving power is set to the reference value Tr. This ensures accurate detection of temperature change of the circuit board 6 caused by output of the driving power. In this manner, highly accurate stuck anomaly determination is constantly performed. As a result, an anomaly of the temperature sensor 11 is quickly detected under a comparatively wide range of conditions of use.

The above illustrated embodiment may be modified as follows.

In the above-described embodiment, the MPU 7, which serves as the monitor control unit and the anomaly detecting device, also functions as a calculation processing unit of the temperature sensor 11, which processes the output signal of the heat sensitive element 10. However, the present invention is not restricted to this and the temperature sensor 11 may include a dedicated calculation processing unit.

In the above-described embodiment, the MPU 7 configures a drive determining section, a reference value maintaining section, a stuck anomaly detecting section, a break anomaly detecting section, a short-circuit anomaly detecting section, an overheating anomaly detecting section, an anomaly confirming section, and an output suspending section of the anomaly detecting device. However, the present invention is not restricted to this and the anomaly detecting device may be configured independently of the MPU 7, which serves as the motor control unit. Alternatively, the respective components of the anomaly detecting device may be configured separately as multiple calculation processing units.

In the above-described embodiment, when the drive circuit 3 is in the non-driving state, the MPU 7 updates the reference value Tr of the board temperature T, which is memorized in the storage area 12, to a new detected value Tc at each predetermined calculation cycle as needed. However, the present invention is not restricted to this and, for example, the reference value Tr may be updated as needed when a specific event occurs. That is, the time for updating the reference value Tr does not necessarily have to be periodical. Alternatively, instead of updating the reference value Vr to a new detected value Tc as needed, the detected value Tc of the board temperature T detected at a specific time may be memorized as the reference value Tr.

In the above-described embodiment, the target of the output of driving power by the drive circuit 3 is the motor 8 of the actuator 5. However, the target may be any suitable target that changes the temperature of the circuit board 6 due to the output of driving power.

In the above-described embodiment, the determination of detection of an anomaly is confirmed if the anomaly is detected continuously for a predetermined time. The requirement of such continuation for the predetermined time does not necessarily have to be set. On the other hand, a requirement of continuation for a predetermined time may be added to the operating state determination for the drive circuit 3.

## Claims

1. An anomaly detecting device comprising:
a drive determining section that determines an operating state of a drive circuit arranged on a circuit board;
a reference value maintaining section, wherein, when the drive circuit is in a non-driving state, the reference value maintaining section maintains a detected value of a board temperature detected by a temperature sensor arranged on the circuit board as a reference value of the board temperature; and
a stuck anomaly detecting section, wherein
when the drive circuit is in a driving state, the stuck anomaly detecting section calculates a difference between the detected value of the board temperature detected by the temperature sensor and the reference value of the board temperature maintained by the reference value maintaining section, and
if an absolute value of the difference is less than or equal to a predetermined threshold value, the stuck anomaly detecting section determines that there is a stuck anomaly of an output signal in the temperature sensor.

2. The anomaly detecting device according to claim 1, wherein, when the drive circuit is in the non-driving state, the reference value maintaining section updates the reference value, as needed, to the detected value that is newly detected.

3. The anomaly detecting device according to claim 1 or 2, further comprising a break anomaly detecting section, wherein, if the detected value of the board temperature detected by the temperature sensor is greater than or equal to a predetermined threshold value, the break anomaly detecting section determines that there is a break anomaly in the temperature sensor.

4. The anomaly detecting device according to any one of claims 1 to 3, further comprising a short-circuit anomaly detecting section, wherein, if the detected value of the board temperature detected by the temperature sensor is less than or equal to a predetermined threshold value, the short-circuit anomaly detecting section determines that there is a short-circuit anomaly in the temperature sensor.

5. The anomaly detecting device according to any one of claims 1 to 4, further comprising an overheating anomaly detecting section, wherein, if the detected value of the board temperature detected by the temperature sensor is greater than or equal to a predetermined threshold value, the overheating anomaly detecting section determines that the circuit board is in an overheated state.

6. The anomaly detecting device according to any one of claims 1 to 5, comprising an anomaly confirming section, wherein, when an anomaly is detected continuously for a predetermined time, the anomaly confirming section confirms determination of detection of the anomaly.

7. The anomaly detecting device according to any one of claims 1 to 6, further comprising an output suspending section, wherein, when an anomaly of the temperature sensor is detected, the output suspending section suspends output of driving power by the drive circuit.
